# FASCICULE DE BREVET EUROPEEN

(11) **EP 0 380 407 B1**
(45) Date de publication et mention de la délivrance du brevet: **17.03.1993**
(21) Numéro de dépôt: 90400190.6
(22) Date de dépôt: 23.01.1990
(51) Int. Cl.: F02B 37/02, F01N 7/08

(54) **Collecteur d'échappement d'un moteur à combustion interne suralimenté**
Auspuffkrümmer für eine aufgeladene innere Brennkraftmaschine
Exhaust manifold for a supercharged internal-combustion engine

(30) Priorité: 25.01.1989 FR 8900913
(43) Date de publication de la demande: 01.08.1990
(73) Titulaire: AUTOMOBILES PEUGEOT, 75116 Paris (FR); AUTOMOBILES CITROEN, 92200 Neuilly-sur-Seine (FR)
(72) Inventeur: Schwab, Luc, F-92700 Colombes (FR)
(74) Mandataire: Durand, Yves Armand Louis

(56) Documents cités:
- EP-A- 0 284 466
- WO-A-86/03256
- DE-A- 3 603 868
- FR-A- 1 386 068
- FR-A- 1 414 452
- GB-A- 971 405
- US-A- 3 470 690
- US-A- 3 670 844

## Description

L'invention se rapporte à un collecteur d'échappement d'un moteur à combustion interne suralimenté.

A cet effet, ce collecteur d'échappement est destiné à être interposé entre la culasse du moteur et un compresseur du type centrifuge ou turbocompresseur.

En général, les collecteurs d'échappement connus sont constitués par un ensemble de conduits formés, d'une part de conduits dérivés dont l'extrémité libre dite d'entrée est reliée à la culasse du moteur, et plus particulièrement aux tubulures d'échappement des gaz ménagées dans celui-ci et appelées chapelles, et d'autre part de conduits principaux dans chacun desquels débouchent plusieurs de ces conduits dérivés, et dont l'extrémité libre, dite de sortie, est reliée à un boitier commun.

Dans certains moteurs suralimentés, le boîtier commun susmentionné dirige les gaz d'échappement reçus des conduits, et en particulier des conduits principaux, vers une turbine dite d'entraînement du turbocompresseur, cette turbine étant reliée mécaniquement en rotation à un compresseur de suralimentation assurant, directement ou par l'intermédiaire d'un système de refroidissement, l'arrivée sous pression de l'air formant comburant, et éventuellement du mélange carburant-comburant vers les soupapes d'admission du moteur.

Par ailleurs, on connaît d'après EP-A-284 466, un collecteur d'échappement du type mentionné dans le préambule de la revendication 1, comportant plusieurs conduits séparés qui débouchent de façon adjacente, à leur extrémité de sortie, dans un boîtier commun.

On sait également que les unités de suralimentation fonctionnent en général soit selon un mode de suralimentation à pression constante, soit selon un mode de suralimentation par impulsions.

Le mode de suralimentation à pression constante nécessitant une chambre collectrice de grand volume et de large section où débouchent les conduits reliés aux cylindres, on préfère utiliser, pour des raisons d'optimisation et de rationalisation, le mode de suralimentation par impulsions.

Ce mode de suralimentation utilise les mouvements importants des gaz appelés "bouffées" qui sont générés lors de l'ouverture des soupapes d'échappement.

Ces bouffées permettent, lors de leur passage dans la turbine d'entraînement du turbocompresseur, d'augmenter la vitesse de la turbine de suralimentation et donc d'accroître le débit d'air ainsi que sa pression, et éventuellement ceux des mélanges carburant-comburant, dans les cylindres.

Dès lors, pour garantir un fonctionnement efficace du turbocompresseur, ces bouffées doivent se succéder régulièrement.

Cependant, à l'ouverture des soupapes d'échappement, et avant d'être générées, ces bouffées sont précédées d'une onde de pression susceptible d'être réfléchie dans le collecteur et de revenir par un des conduits, vers les autres cylindres.

Aussi, l'invention a principalement pour but d'éviter le retour vers les cylindres des ondes de pression. Plus précisément, le but de l'invention est de proposer un collecteur d'échappement dont les conduits ont des sections aptes à provoquer une accélération progressive des gaz d'échappement à l'intérieur des conduits séparés puis du boîtier de raccordement, tout en évitant les retours d'ondes de pression d'un conduit séparé à l'autre.

Par ailleurs, étant donné qu'il est impératif, dans la plupart des véhicules modernes, d'optimiser l'espace occupé par le groupe moto-propulseur pour minimiser son encombrement et améliorer l'habitabilité desdits véhicules, l'invention a également pour but d'améliorer le rendement de l'unité de suralimentation collecteur-turbocompresseur, et ce afin de minimiser son volume.

A cet effet, l'invention a pour objet un collecteur d'échappement d'un moteur à combustion interne suralimenté, destiné à relier chacun des cylindres du moteur à un turbocompresseur, et du type comportant plusieurs conduits séparés, chacun desquels étant d'une part respectivement raccordé à un seul des cylindres par son extrémité dite d'entrée et d'autre part raccordé à son extrémité dite de sortie à un boîtier commun, les conduits débouchant dans ce boîtier de façon sensiblement adjacente et parallèle, caractérisé en ce qu'une partie de liaison du boîtier étant raccordée à l'entrée du turbocompresseur et débouchant dans celui-ci, lesdits conduits ont chacun une extrémité de sortie de section efficace réduite de 30% au moins par rapport à la section de l'extrémité d'entrée correspondante, la section efficace du boîtier commun décroissant elle-même jusqu'à la partie de liaison précitée, tandis que la section efficace de raccordement du boîtier commun avec le turbocompresseur au niveau de la partie de liaison est réduite par rapport à la section efficace de l'extrémité de réunion de ce boîtier commun avec les conduits qui est formée par la somme des sections (S1) des extrémités de sortie des conduits (8-11), et a une valeur comprise entre 0,375 et 0,75 fois ladite section efficace de l'extrémité de réunion.

Suivant une autre caractéristique de l'invention, la variation de section de chaque conduit est réalisée sur une longueur supérieure à la valeur du diamètre dit équivalent de la section efficace de l'extrémité d'entrée.

Dans le cas où le moteur à combustion interne possède quatre cylindres, la section efficace de raccordement du boîtier commun avec le turbocompresseur, au niveau de la partie de liaison, a une valeur comprise entre 1,5 et 3 fois la section efficace de l'extrémité de sortie d'un des conduits séparés.

Mais d'autres avantages de l'invention apparaîtront mieux dans la description détaillée qui suit et se réfère aux dessins annexés donnés uniquement à titre d'exemple, et dans lesquels :
La figure 1 est une vue très schématique d'un collecteur d'échappement selon l'invention qui équipe un moteur à combustion interne, de préférence à quatre cylindres, et qui est agencé selon un mode de réalisation préféré ;
La figure 2 est une vue très schématique représentant l'orientation de deux conduits adjacents, l'un par rapport à l'autre, du collecteur selon l'invention ;
Les figures 3a à 3c représentent des courbes d'évolution de la section transversale de chacun des conduits selon l'invention ;
Les figures 4a à 4c représentent respectivement différents modes de réalisation des sections de sortie des conduits au niveau de leur réunion avec le boîtier commun relié au turbocompresseur.

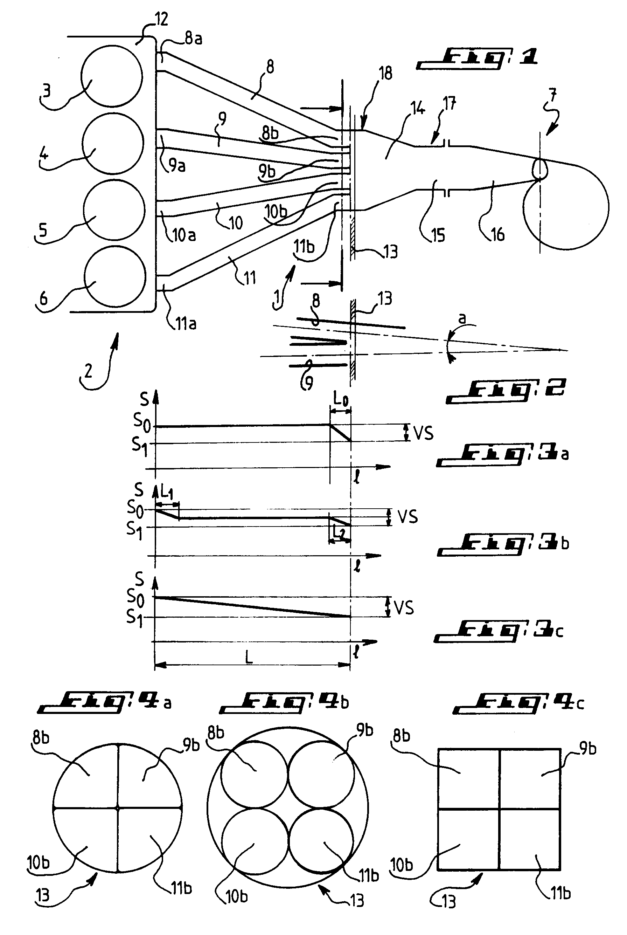

En se reportant à la figure 1, il est représenté, de façon très schématique, un collecteur d'échappement 1 monté entre un moteur à combustion interne 2, de préférence à quatre cylindres respectivement 3, 4, 5 et 6, et une turbine du type centripète d'un turbocompresseur 7.

Le collecteur d'échappement 1 est constitué d'un ensemble de quatre conduits 8, 9, 10 et 11 dont l'extrémité libre respective 8a, 9a, 10a et 11a dite d'entrée est reliée à la culasse 12 du moteur à combustion interne 2, et plus particulièrement à la ou aux tubulures d'échappement ou chapelles des soupapes d'échappement respectives, non représentées, des cylindres 3 à 6.

L'autre extrémité 8b, 9b, 10b, 11b dite de sortie de chaque conduit 8, 9, 10 et 11 est reliée, au niveau d'une zone de réunion 13, à un boîtier commun 14 dont une partie de liaison 15 est raccordée à un carter d'admission 16 du turbocompresseur 7 et débouche dans celui-ci.

En se reportant à la figure 2, on remarquera que les extrémités de sortie des conduits adjacents, par exemple 8 et 9, sont orientées l'une par rapport à l'autre d'un angle a compris entre 0 et 30 degrés, ces extrémités de sortie étant de préférence convergentes vers le boîtier commun lorsque l'angle a est différent de zéro.

De préférence, et comme cela est représenté sur la figure 1, les extrémités de sortie des conduits adjacents 8-9, 9-10 et 10-11 du collecteur d'échappement 1 sont orientées de façon sensiblement parallèle, l'angle a étant proche de zéro, voire nul.

De plus, on précisera que les extrémités de sortie, 8b et 11b sur la figure 1, qui débouchent de façon adjacente à la paroi du boîtier commun 14, prévue dans la zone de réunion 13, sont orientées par rapport à cette paroi de façon sensiblement parallèle.

On remarquera aussi, sur la figure 1, que chaque conduit 8, 9, 10 et 11 est relié à l'un, et uniquement à celui-ci, des cylindres 3, 4, 5 ou 6 du moteur 2, les flux respectifs d'échappement de chaque cylindre provenant de la ou des soupapes d'échappement correspondantes étant séparés les uns des autres, des cylindres jusqu'au boîtier commun 14.

Ainsi, le collecteur d'échappement 1 selon l'invention ne comporte, parmi l'ensemble des quatre conduits 8 à 11, aucun conduit dérivé formant un nombre de jonctions supplémentaires entre les extrémités d'entrée et de sortie, comme cela est le cas dans les collecteurs d'échappement classiques mentionnés ci-dessus.

En se référant aux figures 3a à 3c qui représentent l'évolution de la section efficace S des conduits 8 à 11, en fonction de leur longueur l, on précisera que la section efficace S1 de chaque extrémité de sortie 8b-11b est réduite pour être inférieure ou sensiblement égale à 0,7 fois la section efficace S0 de l'extrémité d'entrée 8a-11a du conduit correspondant.

Cette variation de section VS de chaque conduit 8-11, conduisant à une diminution de sa section de sortie, peut être réalisée, soit comme on le voit sur la figure 3a essentiellement au niveau des extrémités de sortie 8b-11b, soit comme on le voit sur la figure 3b en deux parties et de façon localisée, d'une part au niveau de l'extrémité d'entrée 8a-11a et d'autre part au niveau de l'extrémité de sortie 8b-11b, soit comme cela est représenté sur la figure 3c, de façon répartie sur toute la longueur L des conduits 8 à 11.

De préférence, la variation de section VS de chaque conduit 8 à 11 est réalisée sur une longueur L0 supérieure au diamètre dit équivalent correspondant à la section efficace S0 de l'extrémité d'entrée 8a-11a.

Dans le cas où la variation de section VS est répartie au niveau de l'extrémité d'entrée 8a-11a et de l'extrémité de sortie 8b-11b de chaque conduit 8 à 11, on précisera que la somme des longueurs L1 et L2 sur lesquelles est réalisée la variation de section VS, respectivement au niveau de l'extrémité d'entrée et au niveau de l'extrémité de sortie, est supérieure ou égale à la longueur L0.

Par ailleurs, en se référant à la figure 1, on remarquera que le boîtier commun 14 comporte de même à son extrémité de sortie 17, au niveau de la partie de liaison 15, une section efficace dite de raccordement qui est réduite par rapport à la section efficace dite de réunion de son extrémité d'entrée 18, au niveau de la zone de réunion 13.

Dans le cas d'un moteur à quatre cylindres, la section efficace de raccordement de l'extrémité de sortie 17 du boîtier commun 14 a une valeur comprise entre 1,5 et 3 fois la section efficace S1 de l'extrémité de sortie 8b-11b d'un des conduits 8 à 11. Ainsi, quel que soit le type du moteur, la section efficace de raccordement de l'extrémité de sortie 17 du boîtier commun 14 est réduite par rapport à la section efficace de réunion de ce même boîtier, formée par la somme des sections efficaces S1 des extrémités de sortie 8b-11b des conduits 8 à 11, et est d'une valeur comprise entre 0,375 et 0,75 fois ladite section efficace de réunion.

Il a été représenté sur les figures 4a à 4c différents modes de réalisation des extrémités de sortie 8b à 11b des conduits 8 à 11, dans la zone de réunion 13.

Ainsi, sur la figure 4a, chaque extrémité de sortie 8b-11b a une forme de secteur et vient s'accoller contre les flancs de deux extrémités de sortie adjacentes et de même forme.

Sur la figure 4b, les extrémités de sortie 8b à 11b ont respectivement une forme circulaire et sont disposées dans une enveloppe 19 les maintenant adjacentes.

Sur la figure 4c, les extrémités de sortie 8b à 11b sont de forme polygonale, de préférence carrée, deux de leurs côtés étant disposés respectivement adjacents à l'un des côtés des autres extrémités de sortie voisines.

## Revendications

1. Collecteur d'échappement d'un moteur à combustion interne suralimenté, destiné à relier chacun des cylindres (3-6) du moteur à un turbocompresseur (7), et du type comportant plusieurs conduits (8-11) séparés, chacun desquels étant d'une part respectivement raccordé à un seul des cylindres par son extrémité dite d'entrée (8a-11a) et d'autre part raccordé par son extrémité dite de sortie (8b-11b) à un boîtier commun (14), les conduits débouchant dans ce boîtier de façon sensiblement ad,jacente et parallèle, caractérisé en ce qu'une partie de liaison (15) du boîtier (14) étant raccordée à l'entrée du turbocompresseur (7) et débouchant dans celui-ci, lesdits conduits (8-11) ont chacun une extrémité de sortie (8b-11b) de section efficace (S1) réduite de 30% au moins par rapport à la section (S0) de l'extrémité d'entrée (8a-11a) correspondante, la section efficace du boîtier commun (14) décroissant elle-même jusqu'à la partie de liaison précitée (15), tandis que la section efficace de raccordement (17) du boîtier commun (14) avec le turbocompresseur (7) au niveau de la partie de liaison (15) est réduite par rapport à la section efficace de l'extrémité de réunion (18) de ce boîtier commun avec les conduits (8-11) qui est formée par la somme des sections (S1) des extrémités de sortie des conduits (8-11), et est d'une valeur comprise entre 0,375 et 0,75 fois ladite section efficace de l'extrémité de réunion (18).

2. Collecteur d'échappement selon la revendication 1, caractérisé en ce que la variation de section de chaque conduit (8-11) est réalisée sur une longueur (L0) supérieure à la valeur du diamètre dit équivalent de la section efficace de l'extrémité d'entrée (8a-11a).

3. Collecteur d'échappement selon la revendication 1 ou 2 équipant un moteur à combustion interne à quatre cylindres, caractérisé en ce que la section efficace de raccordement (17) du boîtier commun (14) avec le turbocompresseur (7), au niveau de la partie de liaison (15), est d'une valeur comprise entre 1,5 et 3 fois la section efficace (S1) de l'extrémité de sortie (8b-11b) d'un des conduits (8-11).

## Patentansprüche

1. Auspuffsammelrohr eines aufgeladenen Verbrennungsmotors, das bestimmt ist, jeden der Zylinder (3-6) des Motors mit einem Turboverdichter (7) zu verbinden und derjenigen Gattung mit mehreren getrennten Leitungen (8-11) von denen jede einerseits jeweils mit einem einzigen der Zylinder durch ihr sogenanntes Einlassende (8a-11a) und andererseits durch ihr sogenanntes Auslassende (8b-11b) mit einem gemeinsamen Gehäuse (14) verbunden ist, wobei die Leitungen in etwa angrenzender und paralleler Weise in diesem Gehäuse münden, dadurch gekennzeichnet, dass bei Anschliessen eines Verbindungsteiles (14) des Gehäuses (14) an den Einlass des Turboverdichters (7) und dessen Einmündung in denselben, die besagten Leitungen (8-11) jeweils ein Auslassende (8b-11b) mit einem um wenigstens 30% im Bezug auf den Querschnitt (S0) des entsprechenden Einlassendes (8a-11a) verminderten Wirkquerschnitt (S1) hat, wobei der Wirkquerschnitt des gemeinsamen Gehäuses (14) bis zum vorgenannten Verbindungsteil (14) selbst abnimmt, während der das gemeinsame Gehäuse (14) mit dem Turboverdichter (7) im Bereich des Verbindungsteiles (15) verbindende Wirkquerschnitt (17) im Bezug auf den Wirkquerschnitt des dieses gemeinsame Gehäuse mit den Leitungen (8-11) zusammenfügenden Endes (18) vermindert ist, welcher durch die Summe der Querschnitte (S1) der Auslassenden der Leitungen (8-11) gebildet wird und einen zwischen 0,375 und 0,75 mal den besagten Querschnitt des Zusammensfügungsendes (18) liegenden Wert hat.

2. Auspuffsammelrohr nach Anspruch 1, dadurch gekennzeichnet, dass die Querschnittsveränderung jeder Leitung (8-11) über eine grössere Länge (L0) als der Wert des sogenannten äquivalenten Durchmessers des Wirkquerschnitts des Einlassendes (8a-11a) durchgeführt wird.

3. Einen Verbrennungsmotor mit vier Zylindern ausrüstendes Auspuffsammelrohr nach Anspruch 1 oder 2, dadurch gekennzeichnet, dass der das gemeinsame Gehäuse (14) mit dem Turboverdichter (7) verbindende Querschnitt (17) im Bereich des Verbindungsteiles (15) einen zwischen 1,5 und 3 mal den Wirkquerschnitt (S1) des Auslassendes (8b-11b) einer der Leitungen (8-11) liegenden Wert hat.

## Claims

1. Exhaust manifold of a supercharged internal combustion engine, adapted to connect each one of the cylinders (3-6) of the engine to a turbocompressor (7) and of the type comprising several separated ducts (8-11) each one of which being on the one hand connected to a single one of the cylinders with its so-called inlet end (8a-11a) and on the other hand connected with its so-called outlet end (8b-11b) to a common casing (14), respectively, the ducts opening into this casing in a substantially adjacent and parallel manner, characterized in that a connecting portion (15) of the casing (14) being connected to the inlet of the turbocompressor (7) and opening into the latter, the said ducts (8-11) have each one an outlet end (8b-11b) with an effective section (S1) reduced by at least 30% with respect to the section (S0) of the corresponding inlet end (8a-11a), the effective section of the common casing (14) decreasing itself down to the aforesaid connecting portion (15) whereas the effective section (17) connecting the common casing (14) with the turbocompressor (7) at the connecting portion (15) is reduced with respect to the effective section of the end (18) of junction of this common casing with the ducts (8-11), which is formed of the sum of the sections (S1) of the outlet ends of the ducts (8-11) and has a value line between 0.375 and 0.75 times the said effective section of the junction end (18).

2. Exhaust manifold according to claim 1, characterized in that the variation of the section of each duct (8-11) is provided over a length (L0) greater than the value of the so-called equivalent diameter of the effective section of the inlet end (8a-11a).

3. Exhaust manifold according to claim 1 or 2, fitting an internal combustion engine with four cylinders, characterized in that the effective section (17) of connection of the common casing (14) to the turbocompressor (7), at the connecting portion (15) has a value line between 1.5 and 3 times the effective section (S1) of the outlet end (8b-11b) of one of the ducts (8-11).
